# EUROPÄISCHE PATENTSCHRIFT

(11) **EP 1 848 609 B1**
(45) Veröffentlichungstag und Bekanntmachung des Hinweises auf die Patenterteilung: **05.10.2011**
(21) Anmeldenummer: 05814357.9
(22) Anmeldetag: 01.12.2005
(51) Int. Cl.: B60N 2/01

(54) **KRAFTFAHRZEUGSITZ**
MOTOR VEHICLE SEAT
SIEGE DE VEHICULE A MOTEUR

(30) Priorität: 16.02.2005 DE 102005008306; 27.04.2005 DE 102005020335
(43) Veröffentlichungstag der Anmeldung: 31.10.2007
(73) Patentinhaber: Volkswagen, 38436 Wolfsburg (DE); Dr. Ing. h.c. F. Porsche AG, 70435 Stuttgart (DE)
(72) Erfinder: WEISS, Andreas, 38100 Braunschweig (DE); LEWETZKY, Frank, 75031 Eppingen (DE); DITTUS, Jörg, 71691 Freiberg a. N. (DE)
(74) Vertreter: Schneider, Henry
(86) Internationale Anmeldenummer: PCT/EP2005/013050
(87) Internationale Veröffentlichungsnummer: WO 2006/087023

(56) Entgegenhaltungen:
- EP-A- 0 985 575
- DE-C1- 19 962 424
- US-A- 3 632 157
- US-A- 4 636 006

## Beschreibung

Die Erfindung betrifft einen Kraftfahrzeugsitz mit den im Oberbegriff des Anspruchs 1 genannten Merkmalen, wie US 3 632 157 A offenbart.

Herkömmlicherweise werden Kraftfahrzeugsitze mit einem Sitzrahmen aus Metall realisiert. Insbesondere bei Kraftfahrzeugsitzen mit klappbarer Rückenlehne führt dies zu einer materialintensiven Ausführung der Kinematikbauteile des Klappmechanismus, da die Lasten über diese Kinematikbauteile in die Fahrzeugkarosse abgeleitet werden.

Für Kraftfahrzeugsitze mit klappbarer Rückenlehne existieren Lösungen, bei denen das Sitzteil nach vorn hochgeklappt und das Rückenlehnenteils in den so freigewordenen Raum abgeklappt wird. Daneben ist außerdem bekannt, Kraftfahrzeugsitze mit klappbaren Rückenlehrienteilen und absenkbaren Sitzteilen auszustatten, wobei das Rückenlehnenteil zur Schaffung von im Wesentlichen ebenen Flächen, insbesondere Ladeflächen, auf das Sitzteil klappbar ist.

Ein derartiger Kraftfahrzeugsitz ist beispielsweise aus der DE 198 41 363 C1 bekannt. Bei diesem Kraftfahrzeugsitz ist die Rückenlehne auf das Sitzteil klappbar, um im Anschluss an einen Gepäckraum eine zusätzliche Ladefläche zu schaffen, die durch die Rückseite der Rückenlehne gebildet wird. Damit diese zusätzliche Ladefläche im Wesentlichen auf dem Niveau des Gepäckraumbodens liegt, ist es erforderlich, dass der Sitz in seiner eingeklappten Position möglichst flach ist. Um dies zu erreichen, wird das Sitzteil beim Vorklappen der Rückenlehne abgesenkt und relativ zur Klappachse der Rückenlehne nach vorn verlagert. Das Sitzteil stützt sich über eine vordere Schwinge am Fahrzeugboden ab, die über ein starres Gestänge mit der Rückenlehne verbunden ist. Dieses Gestänge überträgt die Lehnenklappbewegung auf die Schwinge, wodurch diese nach vorn schwenkt und das Sitzteil absenkt sowie nach vorn verlagert.

Auch aus der Patentschrift DE 199 62 424 C1 ist eine Lösung für einen Kraftfahrzeugsitz bekannt, der eine um eine Klappachse klappbare Rückenlehne sowie ein über seinen vorderen Bereich über eine längs verschwenkbare Schwinge abgestütztes Sitzteil aufweist, wobei die Klappbewegung der Rückenlehne über das Gestänge auf die Schwinge übertragen wird, so dass sich das Sitzteil durch Verschwenken der Schwinge beim Nachvorneklappen der Rückenlehne absenkt und beim Zurückklappen der Rückenlehne wieder aufrichtet.

Nachteilig an den bekannten Lösungen ist allerdings, dass bei ihnen stets große Teile des Sitzteils als Metallkonstruktion ausgeführt sind, um den hohen Anforderungen an die Stabilität zu genügen. Das führt zu einem hohen Gewicht des Sitzes. Darüber hinaus sind für diese klappbaren Sitzanlagen aufwendig strukturierte Kinematikbauteile erforderlich, da die Lasten über diese Kinematikbauteile in die Fahrzeugkarosse abgeleitet werden. Dadurch sind zahlreiche Vorkehrungen hinsichtlich der Sicherheit wie beispielsweise eine verstärkte Verankerung der Sitzteile im Boden der Karosserie zu treffen, um zu verhindern, dass sich der Sitz im Falle eines Unfalls löst. Darüber hinaus wirkt sich das hohe Gewicht nachteilig auf den Kraftstoffverbrauch aus.

Der Erfindung liegt daher die Aufgabe zugrunde, einen Kraftfahrzeugsitz auszubilden, mittels dem die genannten Nachteile vermieden werden, bei dem das Gewicht der Konstruktion gegenüber herkömmlichen Lösungen deutlich reduziert wird.

Diese Aufgabe wird durch einen Kraftfahrzeugsitz mit den im Anspruch 1 genannten Merkmalen gelöst.

Ein besonderer Vorteil des erfindungsgemäßen Fahrzeugsitzes besteht im geringen Gewicht des Fahrzeugsitzes. Dies wird erreicht, indem ein Kraftfahrzeugsitz eingesetzt wird, wobei zwischen Sitzteil und Karosserieboden ein Element aus Polymerschaum oder aus einem Material mit hinsichtlich Festigkeit und Gewicht dem Polymerschaum vergleichbaren Eigenschaften angeordnet ist, wobei das Sitzteil direkt oder indirekt über das Element aus Polymerschaum oder aus dem Material mit hinsichtlich Festigkeit und Gewicht dem Polymerschaum vergleichbaren Eigenschaften mit dem Karosserieboden verbunden ist, oder dass das Sitzteil im Wesentlichen aus Polymerschaum oder aus einem Material mit hinsichtlich Festigkeit und Gewicht dem Polymerschaum vergleichbaren Eigenschaften besteht und direkt oder indirekt mit dem Karosserieboden verbunden ist. Diese Reduzierung des Gewichtes der Sitzstruktur wird durch den erfindungsgemäßen Einsatz des Polymerschaums beziehungsweise des vergleichbaren Materials ermöglicht, da nun eine direkte Krafteinleitung in die Fahrzeugkarosserie erfolgt. Besonders vorteilhaft wirkt sich die Verringerung des Gewichtes auf das Verhalten des Sitzes in Unfallsituationen aus. Durch das geringe Gewicht muss die Befestigung des Sitzes am Boden nicht so stark ausgelegt werden, wie beim herkömmlichen Einsatz einer Metallkonstruktion.

Ein zusätzlicher Vorteil bei der Verwendung einer Sitzstruktur aus Polymerschaum besteht darin, dass Prototypen dieser Sitzstruktur schnell verfügbar sind. So ist beispielsweise eine Umrüstung eines Fahrzeugmodells von Klappsitzen mit Zweihandbetätigung auf Einhandbetätigung schnell möglich, selbst wenn die Sitzstruktur neu entwickelt werden soll, um den Änderungsumfang am Fahrzeug gering zu halten. Vorteilhafterweise wird als Polymerschaum ein EPP-Schaum (EPP = expandiertes Polypropylen) verwendet. Durch den Einsatz des erfindungsgemäßen Fahrzeugsitzes werden somit auch die Herstellungskosten gesenkt.

Eine bevorzugte Ausgestaltung des erfindungsgemäßen Kraftfahrzeugsitzes sieht vor, dass der Kraftfahrzeugsitz eine klappbare Rückenlehne aufweist.

In Weiterbildung der Erfindung ist weiter vorgesehen, dass das Sitzteil eine bewegliche und eine bodenfeste im Wesentlichen aus Polymerschaum bestehende Einheit aufweist. Eine bevorzugte Ausführungsform ist dabei so realisiert, dass die bewegliche Einheit des Sitzteils um eine Drehachse nach vorn klappbar und die Rückenlehne um eine zweite Drehachse kippbar ist derart, dass die Rückenlehne direkt oder indirekt auf der bodenfesten Einheit des Sitzteils zur Auflage kommt. Als Vorteil erweist es sich, wenn die Rückenlehne im Bereich der Auflage auf der bodenfesten Einheit des Sitzteils eine Verstärkung aufweist. Eine solche Verstärkung kann beispielsweise ein in das Rückenlehnenteil eingeschäumtes EPP-Profil sein, oder durch die Verwendung von Schäumen unterschiedlicher Dichte erzeugt werden.

Eine andere bevorzugte Ausgestaltung des erfindungsgemäßen Kraftfahrzeugsitzes sieht vor, dass das Sitzteil mit einer Rahmenstruktur versehen ist. Als besonders vorteilhaft erweist es sich, wenn die Rahmenstruktur als Profilrahmenstruktur ausgebildet und/oder dass die Rahmenstruktur in die aus Polymerschaum bestehende, bewegliche Einheit des Sitzteiles eingeschäumt ist. Durch die Profilrahmenstruktur wird eine hohe Torsionssteifigkeit gewährleistet, so dass damit herkömmliche Metallsitzrahmen ohne Einschränkungen in der Sicherheit ersetzt werden können.

Es ist darüber hinaus von Vorteil, wenn das Sitzteil mindestens ein Befestigungselement aufweist, mit welchem ein korrespondierend ausgebildetes zweites Befestigungselement an dem Sitzteil befestigbar ist. Beispielsweise kann bei einer solchen Ausführungsform ein Sitzbezug, welcher derartige zweite Befestigungselemente aufweist, dann mittels der Befestigungselemente des Sitzteils (vorzugsweise lösbar) an dem Sitzteil befestigt werden. Vorzugsweise sind diese Befestigungselemente als Profile ausgebildet, die dann miteinander verrastet oder verclipst werden.

In einer weiteren bevorzugten Ausgestaltung der Erfindung ist vorgesehen, dass der Kraftfahrzeugsitz über mindestens ein bewegliches Befestigungsmittel direkt oder indirekt mit einer Karosserie verbunden ist und ein klappbares, einhandbedienbares Rückenlehnenteil mit einem Rückenlehnenteil-Rahmen sowie ein Sitzteil mit einem Sitzteil-Rahmen umfasst, wobei das Rückenlehnenteil zur Schaffung einer im Wesentlichen ebenen Fläche auf das absenkbare Sitzteil klappbar ist und das Sitzteil beim Klappen relativ zur Karosserie verlagerbar ist, wobei mindestens ein Verbindungsmittel den Rückenlehnenteil-Rahmen und den Sitzteil-Rahmen derart beweglich verbindet, dass beim Klappen des Rückenlehnenteiles um eine erste Drehachse von der Gebrauchsstellung in die Nichtgebrauchsstellung eine gleichzeitige vertikale und horizontale Bewegung des Sitzteiles gegenüber der Karosserie bewirkt wird, und das Rückenlehnenteil direkt oder indirekt auf der Sitzfläche des Sitzteils zur Auflage kommt. Mit dieser Lösung wird in vorteilhafter Weise eine einfache Konstruktion geschaffen, bei der ein leichtes Umklappen der Rückenlehne durch eine Einhandbedienung ermöglicht und zusätzlich das Gewicht des Fahrzeugsitzes reduziert wird. Da der Sitz nach dieser Ausführungsform quasi platt auf dem Karosserieboden aufliegt, müssen beim Einsatz von Kraftfahrzeugsitzen mit klappbarer, einhandbedienbarer Rückenlehne die Elemente der Verlagerungsmechanik nun nur noch im Wesentlichen für die Beanspruchung beim Umklappen des Rückenlehnenteils ausgelegt sein, da sie andere Kräfte, wie sie beispielsweise bei einer Gefahrenbremsung oder einem Unfall auftreten, nicht mehr allein kompensieren müssen, weil das Element aus Polymerschaum nun einen großen Teil der Kräfte aufnimmt. Die Gewichtsreduzierung des Fahrzeugsitzes beziehungsweise Fahrzeugs führt in der Folge zu geringerem Kraftstoffverbrauch. Darüber hinaus führt der Einsatz der Erfindung zu Packagevorteilen, da nun das bei der Sitzstruktur eingesparte Gewicht eine entsprechend größere Zuladung ermöglicht.

In einer anderen bevorzugten Ausgestaltung der Erfindung ist vorgesehen, dass das Sitzteil beim Klappen des Rückenlehnenteils abgesenkt wird. Dieser Effekt kann unterstützt werden, indem die Schäume (beispielsweise PU-Schaum [PU = Polyurethan]) von Sitz und/oder Rückenlehne gering konturiert sind. Dadurch gelingt es, die Rückenlehne besonders niedrig abzusenken, wodurch eine im Wesentlichen waagerechte Ladefläche erzeugt werden kann.

In einer bevorzugten Ausgestaltung der Erfindung wird als Verbindungsmittel eine Schwinge eingesetzt. Durch diese Schwinge ruft ein Klappen des Rückenlehnenteiles eine zwangsgesteuerte Bewegung des Sitzteiles hervor. Je nach konstruktiver Ausführung ist diese Schwinge beidseitig des Kraftfahrzeugsitzes angeordnet. Die mindestens eine Schwinge ist an einem ersten Befestigungspunkt am Rückenlehnenteil-Rahmen auf einer zweiten Drehachse drehbar angeordnet. Am Sitzteil-Rahmen des Sitzteiles ist diese Schwinge an einem zweiten Befestigungspunkt starr angeordnet. Anstelle einer Schwinge als Verbindungsmittel können auch eine Koppelstange, eine Hebelanordnung oder eine Schubstange eingesetzt werden.

In speziellen Ausführungsformen ist weiterhin vorgesehen, dass das Rückenlehnenteil über mindestens ein hinteres Bein als Befestigungsmittel am Rückenlehnenteil-Rahmen drehbar auf der ersten Drehachse relativ zur Karosserie verlagerbar ist und direkt oder indirekt über eine Führungsschiene oder dergleichen mit der Karosserie fest verbunden ist, oder dass das Sitzteil über mindestens ein vorderes Bein als Befestigungsmittel am Sitzteil-Rahmen drehbar auf einer dritten Drehachse relativ zur Karosserie verlagerbar ist und direkt oder indirekt über eine Führungsschiene oder dergleichen mit der Karosserie über eine vierte Drehachse drehbar verbunden ist, oder dass das Rückenlehnenteil ein Schloss zur Verriegelung des Kraftfahrzeugsitzes an der Karosserie aufweist, oder dass das Rückenlehnenteil ein Abdeckelement zur Ausbildung einer ebenen Fläche zum Anschluss an einen Ladeboden oder dergleichen in Nichtgebrauchsstellung des Kraftfahrzeugsitzes aufweist.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: die Veranschaulichung eines Kraftfahrzeugsitzes mit zweitilig ausgeführtem Sitzteil und einer in die bewegliche Einheit eingeschäumten Rahmenstruktur;
- Figur 2: eine erste Variante eines Kraftfahrzeugsitzes mit abgeklapptem Rückenlehnenteil in Nichtgebrauchsstellung, wobei das Rückenlehnenteil direkt auf dem festen EPP-Keil aufliegt (ohne Fanghaken);
- Figur 3: eine zweite Variante eines Kraftfahrzeugsitzes mit abgeklapptem Rückenlehnenteil in Nichtgebrauchsstellung, wobei das Rückenlehnenteil eine zusätzliche, eingeschäumte EPP-Verstärkung aufweist und das Rückenlehnenteil direkt auf dem festen EPP-Keil aufliegt (ohne Fanghaken);
- Figur 4: eine dritte Variante eines Kraftfahrzeugsitzes mit abgeklapptem Rückenlehnenteil in Nichtgebrauchsstellung, wobei das Rückenlehnenteil direkt auf dem festen EPP-Keil aufliegt und zusätzlich durch einen Fanghaken abgestützt wird;
- Figur 5: einen Kraftfahrzeugsitz mit klappbarer, einhandbedienbarer Rückenlehne in Klappbewegung von einer Gebrauchsstellung in eine Nichtgebrauchsstellung;
- Figuren 6a und b: Sitzaufbau und Bewegungsablauf beim Herunterklappen der Rückenlehne bis in die Endstellung;
- Figuren 7a bis c: den Aufbau des erfindungsgemäßen Fahrzeugsitzes aus einer EPP-Einheit und einer Sitzfläche aus PU-Schaum sowie eine Veranschaulichung des Bewegungsablaufes beim Herunterklappen der Rückenlehne;
- Figur 8: ein mit einem Profileinlegeteil versehenes Sitzteil und
- Figur 9: die Veranschaulichung der Befestigung eines Sitzbezugs am Sitzteil mittels zweier Kunststoffprofile.

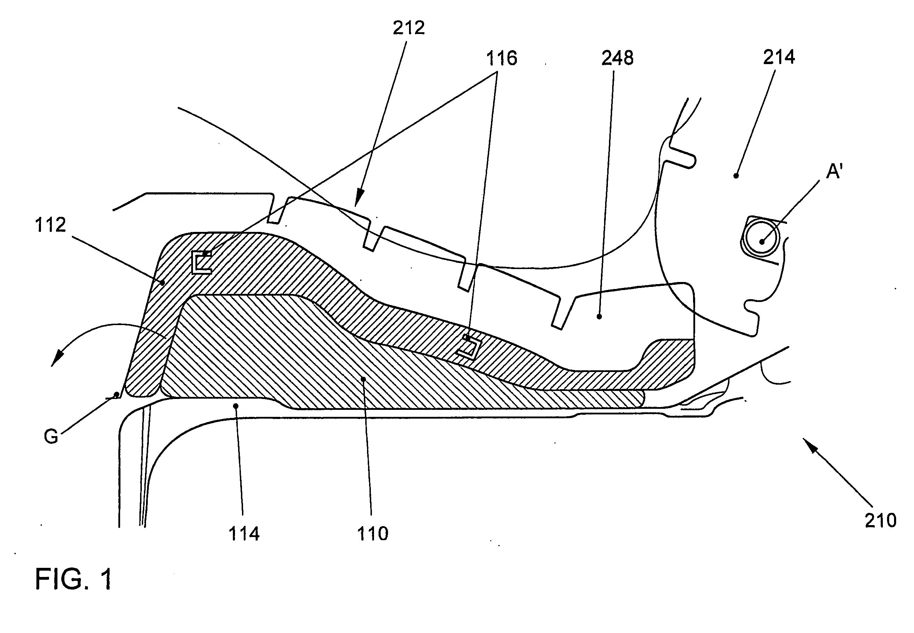

Anhand der Figur 1 soll die Erfindung an der beispielhaften Ausführungsform eines Kraftfahrzeugsitzes 210 in größerem Detail erläutert werden. In dieser Ausführungsform ist das Sitzteil 212 aus zwei EPP-Einheiten, einer bodenfesten 110 und einer beweglichen EPP-Einheit 112, aufgebaut. Die bodenfeste EPP-Einheit 110 kann beispielsweise über eingeschäumte Kunststoffinlays direkt mit dem Karosserierohbau 114' verschraubt werden. Die bodenfeste EPP-Einheit 110 zeichnet sich dadurch aus, dass sie als EPP-Stützkeil ausgebildet ist. Dies bietet den Vorteil, dass Kräfte, insbesondere in Fahrtrichtung wirkende Kräfte, großflächig und gleichmäßig direkt in den Fahrzeugboden abgeleitet werden.

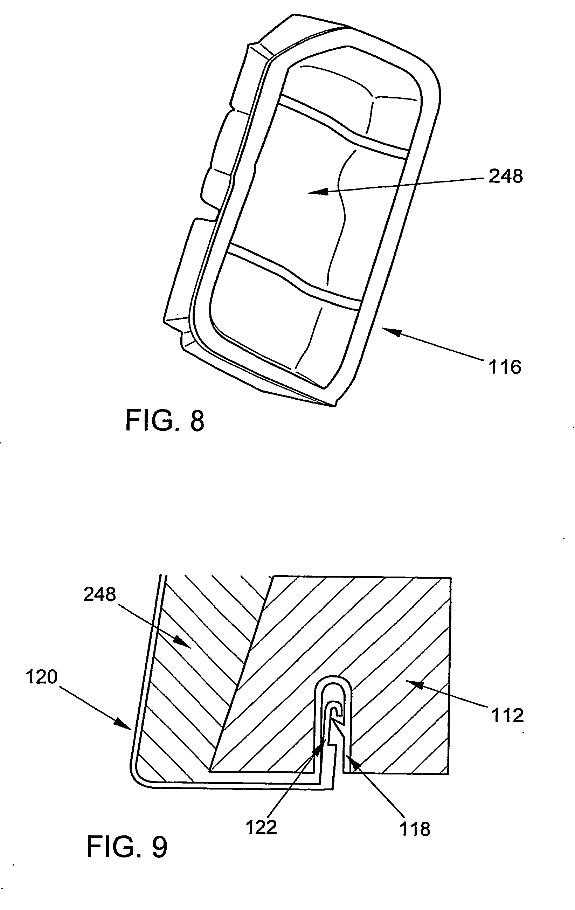

Die bewegliche EPP-Einheit des Sitzteils 212 besteht aus einer Sitzfläche 248 aus PU-Schaum und der als EPP-Sitzträger ausgebildeten beweglichen EPP-Einheit 112. Die bewegliche EPP-Einheit 112 des Sitzteils 212 kann in der durch Figur 1 veranschaulichten Ausführungsform durch Drehen um eine Drehachse G nach vorn gekippt werden. Anschließend ist es möglich, das Rückenlehnenteil 214 um die Drehachse A' nach vorn zu klappen. In die als EPP-Sitzträger ausgebildete bewegliche EPP-Einheit 112 ist eine Profilrahmenstruktur 116 eingeschäumt. Die Profilrahmenstruktur 116 gewährleistet eine hohe Torsionssteifigkeit und ersetzt damit die (teilweise doppelwandig ausgeführte) Sitzwanne aus Metall. Alternativ kann die Profilrahmenstruktur 116 auch zwischen der Sitzfläche 248 aus PU-Schaum und der als EPP-Sitzträger ausgebildeten beweglichen EPP-Einheit 112 angeordnet sein (vergleiche Figur 8).

In einer anderen beispielhaften Ausführungsform des erfindungsgemäßen Fahrzeugsitzes 210 (vergleiche Figur 9) weist die als EPP-Sitzträger ausgebildete bewegliche EPP-Einheit 112 an der Unterseite Befestigungselemente 118, wie beispielsweise ein Kunststoffprofil, auf, mit denen der Sitzbezug 120 durch ein korrespondierend ausgeformtes Profilstück 122 befestigt werden kann, indem das am Sitzbezug 120 angebrachte Profilstück 122 in dem Befestigungselement 118 verrastet wird. Um eine gleichmäßige Befestigung des Sitzbezuges 120 zu erreichen, kann das Befestigungselement 118 (zum Beispiel ein Kunststoffprofil) in der als EPP-Sitzträger ausgebildeten beweglichen EPP-Einheit 112 umlaufend eingeschäumt sein. Alternativ kann zur Befestigung auch der beweglichen EPP-Einheit 112 direkt ein Profil eingeformt sein, so dass das am Sitzbezug 120 angebrachte Profilstück 122 direkt in der als EPP-Sitzträger ausgebildeten beweglichen EPP-Einheit 112 verclipst wird. In einer bevorzugten Ausführungsform ist die Befestigung des Sitzbezuges 120 lösbar.

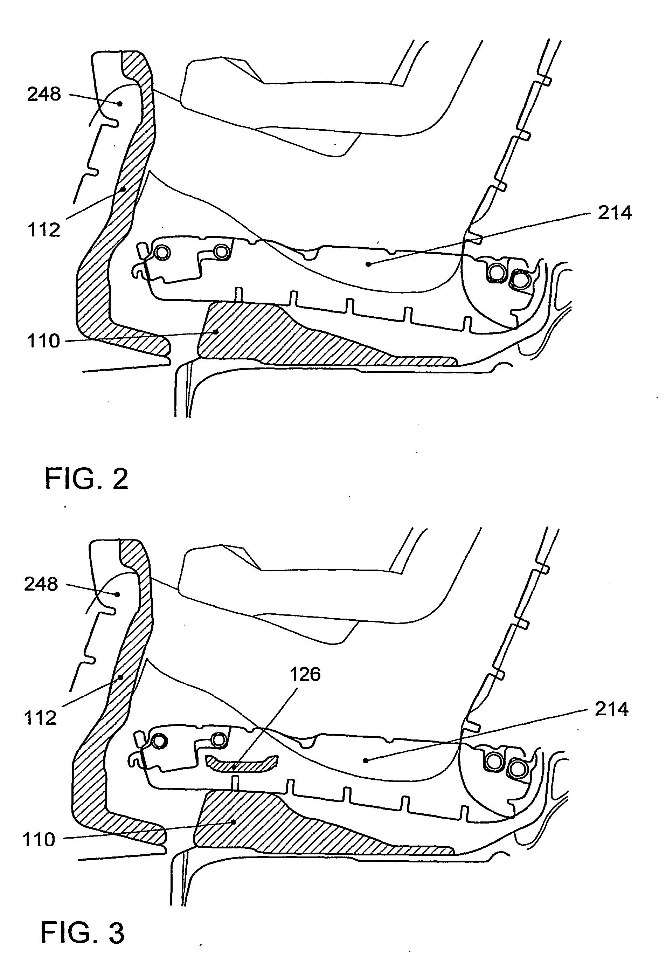

In den Figuren 2 bis 4 sind verschiedene Alternativen für die Rückenlehnenablage wiedergegeben. In Figur 2 ist die hochgeklappte bewegliche EPP-Einheit 112 des Sitzteils 212 und die bodenfeste EPP-Einheit 110 zu erkennen. Das Rückenlehnenteil 214 ist nach vorn geklappt und liegt direkt auf der keilförmigen bodenfesten EPP-Einheit 110 auf. Da bei einem direkten Aufliegen des Rückenlehnenteils 214 bei hoher Belastung durch Zuladung die Rückenlehnenschaumstruktur 124 durch Verformung beschädigt werden kann, ist in einer bevorzugten Ausführungsform vorgesehen, in das Rückenlehnenteil 214 eine zusätzliche Verstärkung, vorzugsweise ein zusätzliches EPP-Profil 126, einzuschäumen. Dadurch werden die Verformungen durch Verbesserung der Auflagekräfte deutlich reduziert. Eine Verstärkung der relevanten Bereiche des Rückenlehnenteils 214 kann auch erreicht werden, indem Schäume unteschiedlicher Dichte eingesetzt werden. Vorteilhafterweise sind diese Verstärkungen auch hinsichtlich des Sitz- und/oder Fahrkomforts angepasst.

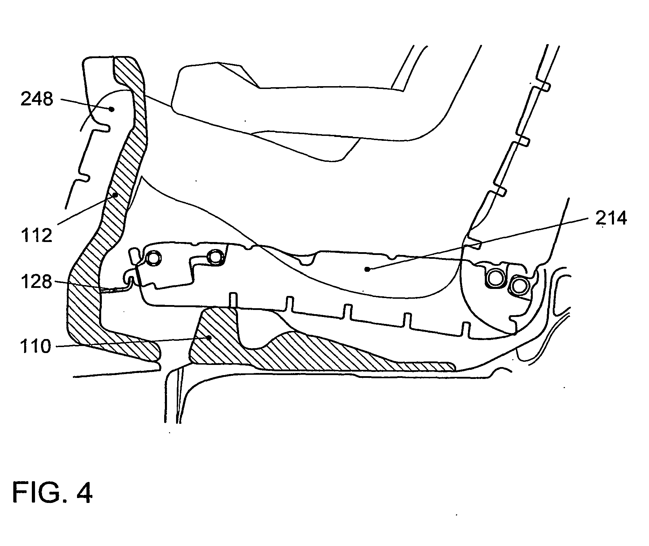

Eine weitere Möglichkeit, eine Beschädigung des Rückenlehnenteils 214 zu vermeiden, ist in Figur 4 dargestellt. Bei dieser Lösung ist an der beweglichen EPP-Einheit 112 des Sitzteils 212 ein Fanghaken 128 angebracht, der das abgeklappte Rückenlehnenteil 214 aufnimmt, und so die Rückenlehnenschaumstruktur 124 entlastet.

Um bei einer direkten Auflage des Rückenlehnenteils 214 die Rückenlehnenschaumstruktur 124 beziehungsweise den Bezug des Rückenlehnenteils 214 zu schonen, kann die bodenfeste EPP-Einheit 110 mit einem schmutzunempfindlichen Dekor, wie beispielsweise Nadelfilz oder TOP, überzogen werden.

In den vorstehend vorgestellten Ausführungsbeispielen ist eine Mechanik beschrieben worden, bei welcher das Abklappen des Rückenlehnenteils 214 in zwei Schritten - Hochklappen der beweglichen EPP-Einheit 112 des Sitzteils 212 und anschließendes Herunterklappen des Rückenlehnenteils 214 - erfolgt. Demgegenüber gibt es Lösungen, die ein Herunterklappen des Rückenlehnenteils 214 in einem Schritt erlauben: Fahrzeugsitze 210 mit so genannter einhandbetätigbarer Klappfunktion. Auch diese können erfindungsgemäß ausgeführt sein.

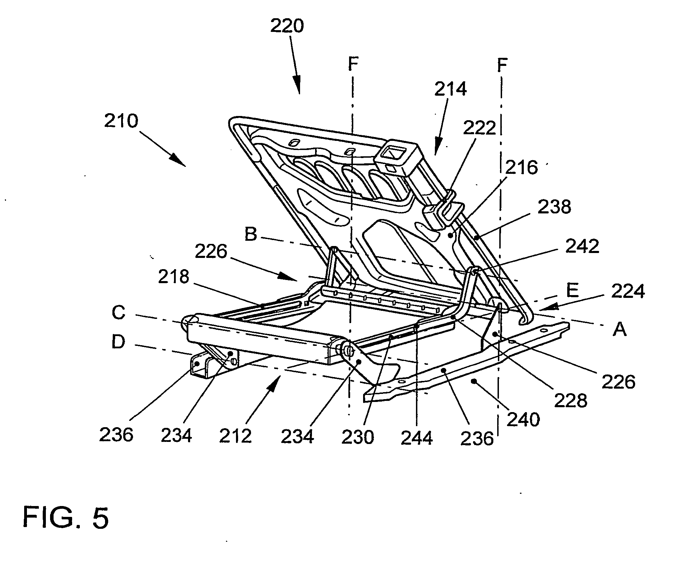

Obwohl das allgemeine Funktionsprinzip einhandbedienbarer, abklappbarer Rückenlehnen bekannt ist, soll eine mögliche Ausführungsform kurz beschrieben werden. Die Figur 5 zeigt einen Kraftfahrzeugsitz 210, der ein Sitzteil 212 und ein Rückenlehnenteil 214 umfasst. Das Rückenlehnenteil 214 weist einen Rückenlehnenteil-Rahmen 216 und das Sitzteil 212 einen Sitzteil-Rahmen 218 auf. Die Figur 5 zeigt den Kraftfahrzeugsitz 210 in bereits teilweise geklappter Position. Die Entriegelung des Rückenlehnenteiles 214 erfolgt dabei durch ein Schloss 222, welches in Gebrauchsstellung des Kraftfahrzeugsitzes 210 die Verbindung zu einer Karosserie 240 herstellt. Das Schloss 222 ist im Bereich zwischen einer Rückenlehnenteil-Oberseite 220 und einer Rückenlehnenteil-Unterseite 224 angeordnet. Das Rückenlehnenteil 214 bildet im Bereich der Rückenlehnenteil-Unterseite 224 eine erste Drehachse A gegenüber der Karosserie 240 aus. Das Rückenlehnenteil 214 ist über bolzenartige Elemente auf einem direkt oder indirekt mit der Karosserie 240 verbundenen hinteren beidseitig ausgeführten Bein 226 auf der ersten Drehachse A drehbar gelagert. Alternativ kann das Rückenlehnenteil 214 auch über bolzenartige Elemente direkt mit der Karosserie 240 drehbar verbunden sein. In der Figur 5 ist das hintere Bein 226 starr mit einer Führungsschiene 236 verbunden, die wiederum mit der Karosserie 240 verbunden ist. Somit stellt die Figur 5 einen indirekt mit der Karosserie 240 verbundenen Kraftfahrzeugsitz 210 dar. Der Kraftfahrzeugsitz 210 kann selbstverständlich dabei zusätzlich in der Führungsschiene 236 in und entgegen der Fahrtrichtung verschoben werden. Auch quer zur Fahrtrichtung ist eine Verschiebung möglich, ohne dass die Lösung dieses Ausführungsbeispiels wesentlicher Veränderungen bedarf. Rückenlehnenteil 214 und Sitzteil 212 sind ausschließlich durch eine Schwinge 228 miteinander verbunden. Diese mindestens einseitig angeordnete Schwinge 228 ist einerseits an einem ersten Befestigungspunkt 242 an einem bolzenartigen Steg, bei beidseitiger Anordnung der Schwinge 228 eine zweite Drehachse B ausbildend, drehbar angeordnet. Die Schwinge 228 ist auf ihrer zum Sitzteil-Rahmen 218 gerichteten Seite an einem zweiten Befestigungspunkt 244 fest mit dem Sitzteil-Rahmen 218 verbunden. Durch eine beidseitige Ausführung der Schwinge 228 und Befestigung der Schwinge 228 am Sitzteil-Rahmen 218 ist eine hohe Stabilität des Rückenlehnenteil-Rahmens 216 gegenüber dem Sitzteil-Rahmen 218 gegeben. Der Sitzteil-Rahmen 218 kann zur Aufnahme der Schwinge 228 eine Aufnahme 230 - in der Figur 5 beispielsweise in Form einer Nut - aufweisen. Das Sitzteil 212 selbst ist auf einer dritten Drehachse C drehbar, also in vertikaler und horizontaler Richtung gegenüber der Karosserie 240, dadurch verlagerbar, dass ein vorderes Bein 234 beidseitig ausgeführt - eine vierte Drehachse D ausbildend - direkt oder indirekt, wie in der Figur 5 dargestellt, mit der Karosserie 240 verbunden ist. Im Ausführungsbeispiel ist das vordere beidseitig ausgeführte Bein 234 entsprechend dem hinteren beidseitig ausgeführten Bein 226 drehbar in der Führungsschiene 236 indirekt mit der Karosserie 240 verbunden.

Ausführungsgemäß ist zur Bildung eines möglichst großen und ebenen Ladebodens in einem Kraftfahrzeug das Rückenlehnenteil 214 mit einer Abdeckung 238 versehen. Soll nun der Kraftfahrzeugsitz 210 von einer Gebrauchsstellung in eine Nichtgebrauchsstellung geklappt werden, wird zunächst das Schloss 222 entriegelt und das Rückenlehnenteil 214 entlang einer Horizontalachse E und gegenüber einer Vertikalachse F in Richtung des Sitzteiles 212 verlagert. Die Klappung des Rückenlehnenteiles 214 findet auf der ersten Drehachse A statt.

Zwangsgesteuert mit der Horizontal- und Vertikalbewegung des Rückenlehnenteiles 214 findet die analoge Bewegung des Sitzteiles 212 statt. Die drehbar auf der zweiten Achse B angeordnete Schwinge 228 verschiebt nun durch die starre Anordnung der Schwinge 228 das Sitzteil 212 über die dritte und vierte Drehachse C und D vertikal und horizontal gegenüber der Karosserie 240.

Insbesondere nach Überschreitung der Vertikalachse F des Rückenlehnenteiles 214 ist eine einfache Einhandbedienung zur Klappung des Kraftfahrzeugsitzes 210 möglich, da sich der Schwerpunkt des Rückenlehnenteiles 214 in Richtung des Sitzteiles 212 verlagert. Somit ist in besonders vorteilhafter Weise ein leichtes Klappen des Kraftfahrzeugsitzes 210 mit einer besonders einfachen konstruktiven Lösung durchführbar.

Andere Ausführungsformen von Fahrzeugsitzen mit einhandbedienbarer, abklappbarer Rückenlehne sind den Patentschriften DE 198 41 363 C1 und DE 199 62 424 C1 entnehmbar.

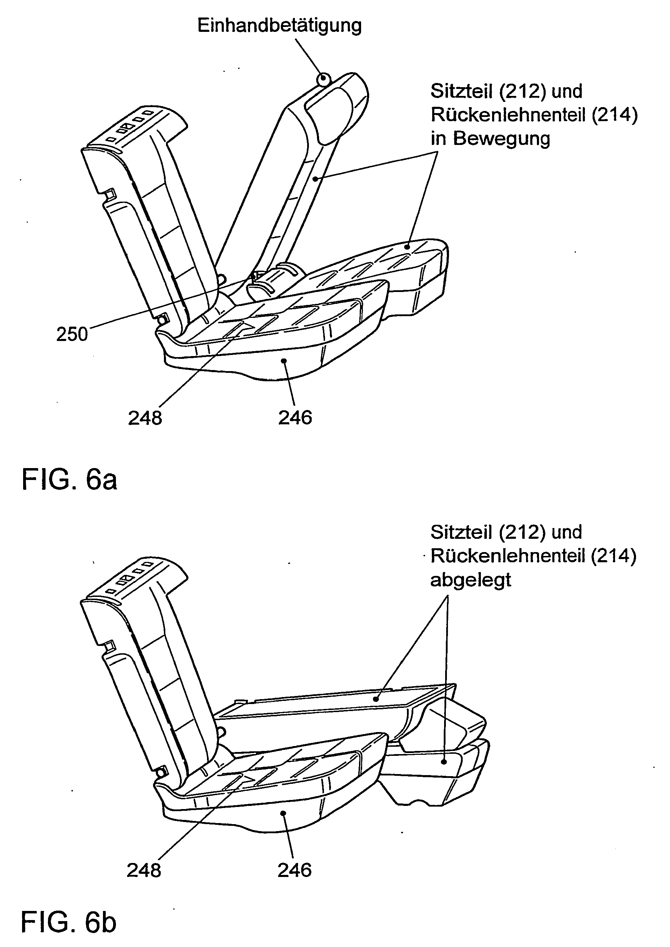

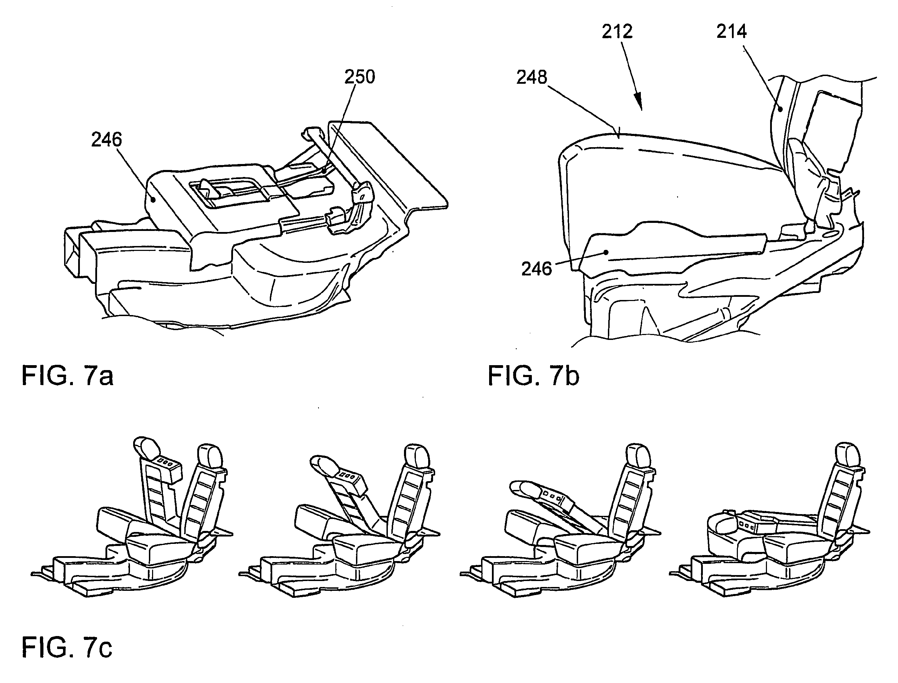

Dieses Funktionsprinzip wird in einer bevorzugten Ausführungsform des erfindungsgemäßen Fahrzeugsitzes übernommen, wie in den Figuren 6 und 7 dargestellt ist. In den Figuren 6 und 7 ist ein Fahrzeugsitz wiedergegeben, dessen Rückenlehnenteil 214 (vergleichbar mit der in DE 198 41 363 C1 beschriebenen Lösung) über eine Koppelstange 250 mit der Verlagerungsmechanik des Sitzteils 212 verbunden ist. Nachdem das Rückenlehnenteil 214 entriegelt worden ist, kann das Rückenlehnenteil 214 in Einhandbetätigung nach vorn geklappt werden, wobei sich das Sitzteil 212 gesteuert durch das drehbar gelagerte vordere Bein in einer kombinierten Bewegung gleichzeitig horizontal und vertikal verlagert. Dabei wird das Sitzteil 212 während der horizontalen Bewegung erst angehoben und anschließend wieder abgesenkt, wie in Figur 7c in vier Ablaufphasen verdeutlicht wird. Außerdem ist in den Figuren 6 und 7 der Aufbau des Sitzteiles 212 aus einer EPP-Sitzstruktur 246 und einer Sitzfläche 248 aus PU-Schaum dargestellt.

In den Figuren 7a und 7b ist auch eine Ausführungsform des erfindungsgemäßen Fahrzeugsitzes in ihrem Aufbau genauer dargestellt. Es handelt sich dabei um ein Sitzteil 212, welches aus einer einteilig ausgeführten EPP-Sitzstruktur 246 und einer Sitzfläche 248 aus PU-Schaum aufgebaut ist. Aus den Figuren 7a und 7b ist deutlich zu ersehen, dass die EPP-Sitzstruktur 246 in der Gebrauchsstellung fast vollständig auf dem Karosserieboden aufliegt. Damit wird, wie oben beschrieben, ein Großteil der horizontal wirkenden Kräfte kompensiert, so dass die Verlagerungsmechanik entlastet wird. Dadurch kann die Verlagerungsmechanik leichter ausgeführt werden. In Figur 7b ist das vollständige Sitzteil 212 aus EPP-Sitzstruktur 246 und einer Sitzfläche 248 aus PU-Schaum dargestellt.

Figur 7c stellt wie bereits erwähnt die verschiedenen Phasen beim Herunterklappen des Rückenlehnenteils 214 dar. In dieser Darstellung ist zu erkennen, dass sich beide Elemente des Sitzteils 212 - EPP-Sitzstruktur 246 und Sitzfläche 248 aus PU-Schaum - beim Herunterklappen des Rückenlehnenteils 214 nach vorn verlagern. Alternativ hierzu kann vorgesehen werden, dass eine EPP-Einheit bodenfest eingebaut ist, so dass diese beim Herunterklappen des Rückenlehnenteils 214 nicht bewegt wird, sondern sich nur das Sitzteil 212 nach vorn verlagert. Auch in dieser Ausführungsform kann das Sitzteil 212 aus einer EPP-Sitzstruktur 246 und einer Sitzfläche 248 aus PU-Schaum aufgebaut sein. Es kann sich auch als vorteilhaft erweisen, eine Ausführungsform mit einer bodenfesten EPP-Einheit und einem Sitzteil 212, welches nur aus einer Sitzfläche 248 aus PU-Schaum besteht, einzusetzen.

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung und dem erfindungsgemäßen Verfahren auch bei grundsätzlich anders gearteten Ausführungen Gebrauch machen. Insbesondere können anstelle von EPP-Schaum beliebige andere Materialien mit vergleichbaren Eigenschaften hinsichtlich Gewicht und Festigkeit eingesetzt werden.

### BEZUGSZEICHENLISTE

- 110: bodenfeste EPP-Einheit
- 112: bewegliche EPP-Einheit
- 114: Karosserierohbau
- 116: Profilrahmenstruktur
- 118: Befestigungselement
- 120: Sitzbezug
- 122: Profilstück
- 124: Rückenlehnenschaumstruktur
- 126: zusätzliches EPP-Profil
- 128: Fanghaken

- 210: Kraftfahrzeugsitz
- 212: Sitzteil
- 214: Rückenlehnenteil
- 216: Rückenlehnenteil-Rahmen
- 218: Sitzteil-Rahmen
- 220: Rückenlehnenteil-Oberseite
- 222: Schloss
- 224: Rückenlehnenteil-Unterseite
- 226: hinteres Bein
- 228: Schwinge
- 230: Aufnahme
- 234: vorderes Bein
- 236: Führungsschiene
- 238: Abdeckung Rückenlehnenteil
- 240: Karosserie
- 242: erster Befestigungspunkt
- 244: zweiter Befestigungspunkt
- 246: EPP-Sitzstruktur
- 248: Sitzfläche aus PU-Schaum
- 250: Koppelstange

- A': Drehachse
- A: erste Drehachse
- B: zweite Drehachse
- C: dritte Drehachse
- D: vierte Drehachse
- E: Horizontalachse
- F: Vertikalachse
- G: Drehachse

## Patentansprüche

1. Kraftfahrzeugsitz (210) mit einem Sitzteil (212), das zwei Einheiten (110, 112) umfasst, wobei eine bodenfeste Einheit (110) aus einem Polymerschaum angeordnet ist, die direkt oder indirekt mit der Karosserie (114, 240) verbunden ist, **dadurch gekennzeichnet, dass** das Sitzteil (212) eine bewegliche Einheit (112) aufweist, die einen Sitzträger (246) aus einem expandierten Polypropylen und eine Sitzfläche (248) aus einem Polyurethan-Schaum aufweist.

2. Kraftfahrzeugsitz nach Anspruch 1, **dadurch gekennzeichnet, dass** der Kraftfahrzeugsitz (210) eine klappbare Rückenlehne aufweist.

3. Kraftfahrzeugsitz nach Anspruch 2, **dadurch gekennzeichnet, dass** die bodenfeste Einheit (110) im Wesentlichen aus EPP-Schaum besteht.

4. Kraftfahrzeugsitz nach Anspruch 3, **dadurch gekennzeichnet, dass** die bewegliche Einheit des Sitzteils (212) um eine Drehachse (G) nach vorn klappbar und die Rückenlehne um eine zweite Drehachse (A') kippbar ist derart, dass die Rückenlehne direkt oder indirekt auf der bodenfesten Einheit des Sitzteils (212) zur Auflage kommt.

5. Kraftfahrzeugsitz nach Anspruch 1, **dadurch gekennzeichnet, dass** die Rückenlehne im Bereich der Auflage auf der bodenfesten Einheit des Sitzteils (212) eine Verstärkung aufweist.

6. Kraftfahrzeugsitz nach Anspruch 1, **dadurch gekennzeichnet, dass** der Kraftfahrzeugsitz (210) ein klappbar einhandbedienbares Rückenlehnenteil (214) aufweist, wobei das Rückenlehnenteil (214) zur Schaffung einer im Wesentlichen ebenen Fläche auf das Sitzteil (212) klappbar ist und das Sitzteil (212) beim Klappen relativ zur Karosserie (240) verlagerbar ist, wobei mindestens ein Verbindungsmittel den Rückenlehnenteil-Rahmen (216) und den Sitzteil-Rahmen (218) derart beweglich verbindet, dass beim Klappen des Rückenlehnenteiles (214) um eine erste Drehachse (A) von der Gebrauchsstellung in die Nichtgebrauchsstellung eine gleichzeitige vertikale und horizontale Bewegung des Sitzteiles (212) gegenüber der Karosserie (240) bewirkt wird, und das Rückenlehnenteil (214) direkt oder indirekt auf der Sitzfläche des Sitzteils (212) zur Auflage kommt.

7. Kraftfahrzeugsitz nach Anspruch 1, **dadurch gekennzeichnet, dass** das Sitzteil mit einer Rahmenstruktur versehen ist.

8. Kraftfahrzeugsitz nach Anspruch 7, **dadurch gekennzeichnet, dass** die Rahmenstruktur als Profilrahmenstruktur (116) ausgebildet und/oder dass die Rahmenstruktur in die aus EPP-Schaum bestehende, bewegliche Einheit des Sitzteiles (212) eingeschäumt ist.

9. Kraftfahrzeugsitz nach Anspruch 1, **dadurch gekennzeichnet, dass** das Sitzteil (212) mindestens ein Befestigungselement (118) aufweist, mit welchem ein korrespondierend ausgebildetes zweites Befestigungselement an dem Sitzteil (212) lösbar befestigbar ist.

## Claims

1. Motor vehicle seat (210) with a seat part (212) which comprises two units (110, 112), wherein there is a floor-mounted unit (110) which consists of a polymer foam and is connected directly or indirectly to the bodywork (114, 240), **characterized in that** the seat part (212) has a movable unit (112) which has a seat support (246) consisting an expanded polypropylene and a seat surface (248) consisting of a polyurethane foam.

2. Motor vehicle seat according to Claim 1, **characterized in that** the motor vehicle seat (210) has a foldable backrest.

3. Motor vehicle seat according to Claim 2, **characterized in that** the floor-mounted unit (110) consists substantially of EPP foam.

4. Motor vehicle seat according to Claim 3, **characterized in that** the movable unit of the seat part (212) can be folded forwards about an axis of rotation (G) and the backrest can be tilted about a second axis of rotation (A') in such a manner that the backrest comes to rest directly or indirectly on the floor-mounted unit of the seat part (212).

5. Motor vehicle seat according to Claim 1, **characterized in that** the backrest has a reinforcement in the region in which it rests on the floor-mounted unit of the seat part (212).

6. Motor vehicle seat according to Claim 1, **characterized, in that** the motor vehicle seat (210) has a backrest part (214) which is foldable in a manner operable by one hand, the backrest part (214) being folded onto the seat part (212) in order to create a substantially flat surface, and the seat part (212) being shiftable relative to the bodywork (240) during the folding operation, and at least one connecting means movably connecting the backrest part frame (216) and the seat part frame (218) in such a manner that, when the backrest part (214) is folded about a first axis of rotation (A) from the use position into the not-in-use position, the seat part (212) is simultaneously moved vertically and horizontally in relation to the bodywork (240), and the backrest part (214) comes to rest directly or indirectly on the seat surface of the seat part (212).

7. Motor vehicle seat according to Claim 1, **characterized in that** the seat part is provided with a frame structure.

8. Motor vehicle seat according to Claim 7, **characterized in that** the frame structure is designed as a profiled frame structure (116), and/or **in that** the frame structure is foamed into the movable unit of the seat part (212), which unit consists of EPP foam.

9. Motor vehicle seat according to Claim 1, **characterized in that** the seat part (212) has at least one fastening element (118) with which a correspondingly designed, second fastening element can be releasably fastened to the seat part (212).

## Revendications

1. Siège de véhicule à moteur (210) équipé d'une partie de siège (212) qui comprend deux unités (110, 112), une unité (110) fixée au plancher étant réalisée à partir d'une mousse de polymère et reliée directement ou indirectement à la carrosserie (114, 240), **caractérisé en ce que** la partie de siège (212) comporte une unité mobile (112) qui comporte un support de siège (246) fabriqué à partir d'un polypropylène expansé et une surface de siège (248) fabriquée à partir d'une mousse de polyuréthanne.

2. Siège de véhicule à moteur selon la revendication 1, **caractérisé en ce que** le siège de véhicule à moteur (210) comporte un dossier rabattable.

3. Siège de véhicule à moteur selon la revendication 2, **caractérisé en ce que** l'unité (110) fixée au plancher se compose pour l'essentiel de mousse EPP.

4. Siège de véhicule à moteur selon la revendication 3, **caractérisé en ce que** l'unité mobile de la partie de siège (212) peut être rabattue vers l'avant autour d'un axe de rotation (G) et que le dossier peut être basculé autour d'un deuxième axe de rotation (A'), de telle sorte que le dossier repose directement ou indirectement sur l'unité fixée au plancher de la partie de siège (212).

5. Siège de véhicule à moteur selon la revendication 1, **caractérisé en ce que** le dossier comporte un élément de renfort dans la zone d'appui sur l'unité fixée au plancher de la partie de siège (212).

6. Siège de véhicule à moteur selon la revendication 1, **caractérisé en ce que** le siège de véhicule à moteur (210) comporte une partie de dossier (214) rabattable avec une seule main, à partie de dossier (214) pouvant être rabattue pour créer une surface pour l'essentiel plane sur la partie de siège (212) et la partie de siège (212) pouvant être déplacée par rapport à la carrosserie (240) lors du rabattement au moins un élément de jonction reliant de façon mobile le cadre de partie de dossier (216) et le cadre de partie de siège (218) de telle sorte que lors du rabattement de la partie de dossier (214) autour d'un premier axe de rotation (A) de la position d'utilisation dans la position de non--utilisation, un mouvement vertical et horizontal simultané de la partie de siège (212) se produit par rapport à la carrosserie (240) et que la partie de dossier (214) vient directement ou indirectement en appui sur la surface de siège de la partie de siège (212).

7. Siège de véhicule à moteur selon la revendication 1, **caractérisé en ce que** la partie de siège est pourvue, d'une structure d'encadrement.

8. Siège de véhicule à moteur selon la revendication 7, **caractérisé en ce que** la structure d'encadrement prend la forme d'une structure d'encadrement profilée (116) et/ou que la structure d'encadrement est remplie de mousse dans l'unité mobile en mousse EFP de la partie de siège (212),

9. Siège de véhicule à moteur selon la revendication 1, **caractérisé en ce que** la partie de siège (212) comporte au moins un élément de fixation (118) avec lequel un deuxième élément de fixation réalisé de façon correspondante peut être fixé de façon amovible à la partie de siège (212).
